(19) Europäisches Patentamt
European Patent Office
Office européen des brevets

(11)  **EP 2 685 737 B1**

(12)  **EUROPEAN PATENT SPECIFICATION**

(45) Date of publication and mention
of the grant of the patent:
**06.09.2017  Bulletin 2017/36**

(51) Int Cl.:
*H04N 21/2343* (2011.01)       *H04N 21/236* (2011.01)
*H04N 21/2389* (2011.01)       *H04N 21/845* (2011.01)

(21) Application number: **12305853.9**

(22) Date of filing: **13.07.2012**

(54)  **Method and device for allowing seamlessly switching from one layer to another in a conditional access system context**

Verfahren und Vorrichtung zur Ermöglichung der nahtlosen Umschaltung von einer Schicht zu einer anderen in einem Systemkontext mit bedingtem Zugriff

Procédé et dispositif permettant la commutation sans interruption d'une couche à une autre dans un contexte de système d'accès conditionnel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2014  Bulletin 2014/03**

(73) Proprietor: **Broadpeak**
**35700 Rennes (FR)**

(72) Inventors:
• **Le Mancq, Jacques**
**35220 Saint Jean Sur Vilaine (FR)**
• **Dagois, Pierre**
**35770 Vern Sur Seiche (FR)**

• **Louvel, Olivier**
**35750 Iffendic (FR)**
• **Carminati, Lionel**
**35131 Pont Pean (FR)**
• **Guery, Pierre-Jean**
**35000 Rennes (FR)**

(74) Representative: **Le Guen-Maillet**
**5, place de Newquay**
**BP 70250**
**35802 Dinard Cedex (FR)**

(56) References cited:
**WO-A1-2011/123797      WO-A1-2012/060643**
**WO-A2-2004/095825      WO-A2-2004/098170**

## Description

The present invention generally relates to generating streams of respective layers representative of respective versions with respective bitrates of an audio-visual content for allowing seamlessly switching from one layer to another in a conditional access system context.

Currently, most audio-visual content streaming technologies rely on streaming protocols such as RTP (Real-time Transport Protocol, as defined by the normative document RFC 3550) or RTSP (Real Time Streaming Protocol, as defined by the normative document RFC 2326). More recently, streaming technologies are typically based on HTTP (HyperText Transfer Protocol, as defined by the normative document RFC 2616), more appropriate to open networks, such as the Internet.

Adaptive Bitrate Streaming (ABS) is one popular HTTP streaming technique used in streaming multimedia over computer networks and HLS (HTTP Live Streaming) from Apple Inc. is one particular implementation. ABS consists in detecting in real time available network bandwidth and/or processing resources at player side and in consequently adjusting audio-visual content quality. ABS requires an encoder having the capability to encode an audio-visual content at multiple bitrates or display resolutions, called *layers* or *profiles.* Switches between streaming of the different encodings are performed as a function of the detected available resources.

Therefore, there are currently two main modes for delivering audio-visual contents in the context of Pay-TV services, *i.e.* subscription-based television services, over IP (Internet Protocol, as defined by the normative document RFC 791) infrastructures.

The first mode relies on streaming servers, and is adapted to managed networks, *i.e.* network infrastructure on top of which services are offered by a single network operator. These streaming servers ingest or capture the audio-visual content in a form of transport streams and deliver the audio-visual content using RTSP or RTP over UDP (User Datagram Protocol, as defined by the normative document RFC 768). The audio-visual content is bitrate-fixed and content protection is managed using a Conditional Access System (CAS).

The second mode relies on HTTP download servers, and is adapted for open networks, also referred to as open-access networks, *i.e.* network infrastructure on top of which services are independently offered by different network operators, such as the Internet. These download servers implement ABS functions. These download servers ingest or capture the audio-visual content in a form of fragmented files, or chunks, deliver the audio-visual content using HTTP over TCP (Transmission Control Protocol, as defined by the normative document RFC 793). Content protection is managed by using Digital Rights Management (DRM).

CAS relies on a combination of a normalized scrambling algorithm and vendor-dependent encryption protection scheme. The audio-visual data stream is scrambled with a secret key, called control word CW, which is automatically generated in such a way that successive values are not predictable. The control word CW is frequently changed, typically several times per minute, in order to avoid unscrambling by an unauthorized end-user's player device. Encryption is used to protect the control words CW during transmission toward the end-user's player device: the control words CW are encrypted as Entitlement Control Messages (ECM) using a key. The CAS subsystem of the end-user's player device decrypts the ECMs to obtain the control word CW when authorised to do so, as specified by Entitlement Management Messages (EMM).

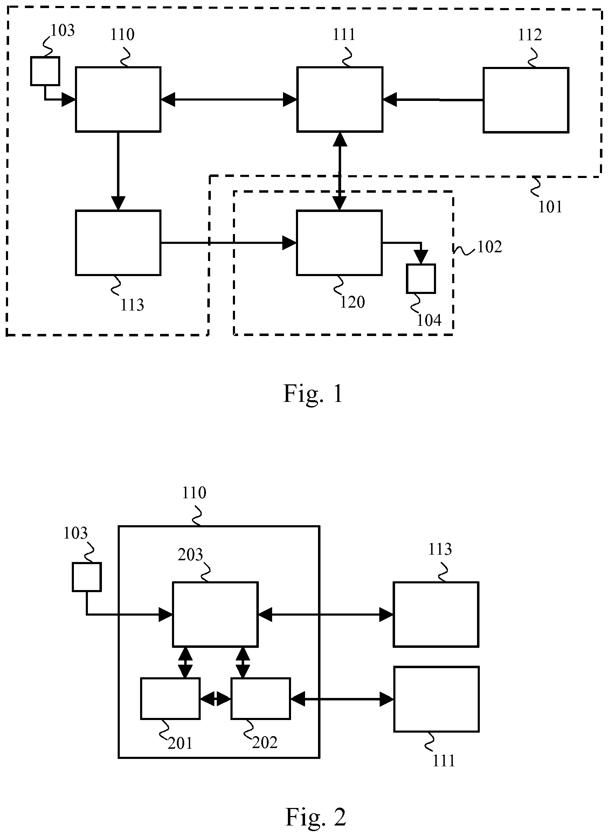

Fig. 1 schematically represents an architecture of a content delivery system of the prior art, based on CAS. The content delivery system comprises, located at premises 101 of a content delivery network (CDN) operator: an encrypting unit 110, a subscriber authorization system 111, a service platform 112 and a server 113. The content delivery system comprises a user terminal 120, located at premises 102 of each subscriber of the content delivery services. Such a user terminal 120 is for instance a set-top box. The user terminal 120 is sometimes also referred to as *player.* Instead of a set-top box, CI (Common Interface, also referred to as DVB-CI for Digital Video Broadcasting - Common Interface) or CI+ technology may be implemented. In DVB, CI is a technology allowing separation of conditional access functionality from a digital TV receiver-decoder, referred to as *host,* into a removable conditional access module. The host is in charge of tuning to pay TV channels, while the conditional access module is in charge of conditional access descrambling.

An audio-visual content 103 is injected in the encrypting unit 110, in charge of scrambling the audio-visual content 103 and of generating the ECMs, as detailed hereafter with regard to Fig. 2.

The encrypting unit 110 is connected to the server 113 for providing the scrambled audio-visual content, the scrambled audio-visual content being then stored by the server 113. The server 113 is then in charge of providing the scrambled audio-visual content to the user terminal 120, via a managed network.

The subscriber authorization system 111 is connected to the encrypting unit 110 for linking the key used to encrypt each control word CW used to scramble an audio-visual content with an identifier contentID of the audio-visual content. The subscriber authorization system 111 is further connected to the user terminal 120 for delivering them license information in view of the end-users' subscriptions and for receiving from them the identifier contentID of the audio-visual content selected by the end-users. The subscriber authorization system 111 is further connected to the service platform 112 for receiving end-users' subscription information.

The concerned audio-visual content is scrambled by the encrypting unit 110 before being ingested on the server 113. When an end-user, who is subscriber of VOD services, requests viewing the audio-visual content via the set-top box 120 in his/her premises 102, the concerned audio-visual content is delivered to the set-top box 120 in the form of an MPEG-2 Transport Stream (TS), as defined in the normative document ISO/IEC 13818-1, for instance following the DVB (Digital Video Broadcasting) standards. The scrambling operation is signalled in the TS packets via TSC (Transport Scrambling Control) information, ECMs are inserted in the TS, PMT (Program Map Tables) comprise Conditional Access descriptors and Conditional Access Tables might be added to the TS.

When the user terminal 120 receives the scrambled audio-visual content from the server 113, the user terminal 120 needs to unscramble the scrambled audio-visual content in order to allow the end-user to view the audio-visual content. After the unscrambling operation, the user terminal 120 outputs an audio-visual content 104, which is expected to match the audio-visual content 103. Decoding of the audio-visual content 104 is usually further performed by a decoder of the user terminal 120. Unscrambling is performed by the user terminal 120 typically in hardware, in cooperation with an embedded CAS client used to decrypt the ECMs, as detailed hereafter with regard to Fig. 2.

**Fig. 2** schematically represents an architecture of the encrypting unit 110.

The encrypting unit 110 comprises a scrambler 203, a CW generator 201 and an ECM generator 202.

The scrambler 203 receives the audio-visual content 103, performs scrambling operation, and provides the scrambled audio-visual content to the server 113. AES (Advanced Encryption Standard) or DVB-CSA (DVB Common Scrambling Algorithm) algorithms are typically used to scramble the audio-visual content 103. It should however be noticed that some parts of the stream injected in the scrambler 203 are not scrambled, such as DVB tables, timestamp information and packet headers.

The CW generator 201 generates a control word $CW_P$, which is valid for one predefined period P, called *crypto-period.* The crypto-period duration is generally equal to sixty seconds for a VOD audio-visual content.

For each crypto-period P, the CW generator 201 provides the generated control word $CW_P$ to the scrambler 203, which uses it to scramble the audio-visual content 103. For each crypto-period P, the ECM generator 202 builds an ECM and the TSC of the TS packets is updated accordingly. Each ECM of a crypto-period P embeds the control word $CW_P$ applied during the crypto-period P. The control word $CW_P$ is ciphered with a unique key $VOD_k$ associated with the audio-visual content 103. The key $VOD_k$ is associated with the audio-visual content 103 thanks to the identifier contentID. This identifier contentID is used by the service platform 112 to initialize the CAS client of the user terminal 120 for retrieving the key $VOD_k$.

The key $VOD_k$ is delivered to the user terminal 120 using an EMM. The EMM may be delivered on a smartcard delivered to the subscriber by the CDN operator and inserted in a smartcard reader of the user terminal 120. Alternatively, a secured link between the user terminal 120 and the subscriber authorization system 111 is setup for delivering the key $VOD_k$.

It appears from the description of Figs. 1 and 2 hereinbefore that CAS does not natively support ABS. DRM would allow getting rid of this drawback of CAS. However, DRM uses different protocols and different scrambling and encryption algorithms. Moreover, the user terminals, such as set-top boxes, already deployed at the end users' premises do not implement or do not have the necessary processing resources to implement DRM. It should further be noticed that the platforms of the player devices already deployed at the end users' premises are heterogeneous. Therefore, implementing DRM in such a context would require upgrading and even replacing the player devices already deployed at the end-users' premises. Although this might be considered as a valuable future for the CDN operators, this approach is costly and time-consuming. Management of CAS-based legacy devices in this context is therefore desirable. WO2012/060643 discloses encryption key rotation for live adaptive streaming an a broadcast environment.

WO2004/095825 discloses a time-multiplexed multi-program encryption system, wherein a sequence of segments from multiple sources is formatted to appear as a single continuous stream to the conditional access system. It is desirable to overcome the aforementioned drawbacks of the prior art.

In particular, it is desirable to provide a solution that allows implementing ABS principles in a conditional access system, while relying on the already deployed user terminals.

It is furthermore desirable to provide a solution that allows seamlessly switching from a layer, representative of an audio-visual content with a first bitrate, to another, representative of the audio-visual content with a second bitrate, in the context of a conditional access system.

To that end, the present invention concerns a method for generating streams of respective layers representative of respective versions with respective bitrates of an audio-visual content for allowing seamlessly switching from one layer to another in a CAS context. The method is defined in claim 1. Thus, by injecting such a multiplexed stream in the scrambler with modified timestamp information, the scrambler uses a same control word CW to scramble segments coming from different layers but corresponding to a same part of the audio-visual content. By extracting the scrambled streams and restoring the timestamp information, each scrambled stream can be independently transmitted and seamless switching from one layer to another can be achieved.

According to a particular feature, the method comprises beforehand inserting stuffing packets.

Thus, ECMs can be inserted during the scrambling process.

According to a particular feature, the method comprises, after restoring timestamp information, deleting stuffing packets that have not been replaced, by said conditional access scrambler, by a message encrypting a control word CW used to scramble the multiplexed segments.

Thus, when it cannot be exactly predicted where ECMs are to be inserted in the multiplexed stream, extra stuffing packets may be inserted and after scrambling, stuffing packets in excess may be removed to save resources.

According to a particular feature, the method further comprises, before modifying said timestamp information: generating a first table providing a correspondence between an index of each segment of each layer and a size of said segment; and extracting the scrambled streams is performed by using said generated first table.

Thus, boundaries between segments of different layers can be easily be retrieved for extracting the scrambled streams.

According to a particular feature, the method further comprises, before modifying said timestamp information: generating at least one second table providing a correspondence between positions of said timestamp information in the multiplexed stream and original values of said timestamp information; and restoring the timestamp information is performed by using said generated at least one second table.

Thus, restoring the timestamp information can be easily be achieved.

According to a particular feature, concatenating the segments and modifying the timestamp information are performed by a multiplexing unit connected upstream to said scrambler and extracting the scrambled streams and restoring the timestamp information are performed by a demultiplexing unit connected downstream to said scrambler, and each said table is provided by the multiplexing unit to the demultiplexing unit using a link not crossing the scrambler.

According to a particular feature, concatenating the segments and modifying the timestamp information are performed by a multiplexing unit connected upstream to said scrambler, and extracting the scrambled streams and restoring the timestamp information are performed by a demultiplexing unit connected downstream to said scrambler, and each said table is provided by the multiplexing unit to the demultiplexing unit by incorporation in a part of the multiplexed stream resistive to scrambling.

According to a particular feature, said timestamp information comprises samples of a counter of a clock reference used to encode each layer for generating said segments.

According to a particular feature, said timestamp information further comprises timestamp information representative of an instant at which audio-visual content data to which it refers have to be provided and/or decoded by a decoder.

The invention further concerns a device for generating streams of respective layers representative of respective versions with respective bitrates of an audio-visual content for allowing seamlessly switching from one layer to another in a conditional access system context. The device is defined in claim 12. The present invention also concerns a computer program that can be downloaded from a communication network and/or stored on a medium that can be read by a processing device. This computer program comprises instructions for causing implementation of the aforementioned method, when said program is run by a processor. The present invention also concerns information storage means, storing a computer program comprising such a computer program.

Since the features and advantages related to the aforementioned device and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:

Fig. 1 schematically represents an architecture of a content delivery system of the prior art;
Fig. 2 schematically represents an architecture of an encrypting unit of the content delivery system of the prior art;
Fig. 3 schematically represents a partial architecture of a content delivery system according to the present invention;
Fig. 4 schematically represents an algorithm for providing scrambled streams corresponding to different layers of an audio-visual content, according to the present invention;
Fig. 5 schematically represents an algorithm for multiplexing, before scrambling, streams corresponding to the different layers of the audio-visual content;
Fig. 6 schematically represents an algorithm for demultiplexing a scrambled stream in order to obtain separate scrambled streams corresponding to the different layers of the audio-visual content;
Fig. 7 schematically represents an algorithm for providing the audio-visual content;
Fig. 8 schematically represents a first table obtained during multiplexing and used during demultiplexing;
Fig. 9 schematically represents a second table obtained during multiplexing and used during demultiplexing.

In order to allow seamlessly switching from one layer of an audio-visual content to another, it is proposed to multiplex on a segment basis streams corresponding to the layers, each segment of one said layer corresponding to the same audio-visual content part as the corresponding segment in another said layer. Each segment comprises timestamp information inserted when the stream comprising said segment has been generated. It proposed to further modify said timestamp information in order to match the timestamp information of a single stream. It proposed to further input the resulting stream to a scrambler, to demultiplex the stream output by the scrambler in order to obtain back a distinct scrambled stream for each said layer and to restore the original timestamp information. The resulting streams can then be provided to a server for streaming the audio-visual content.

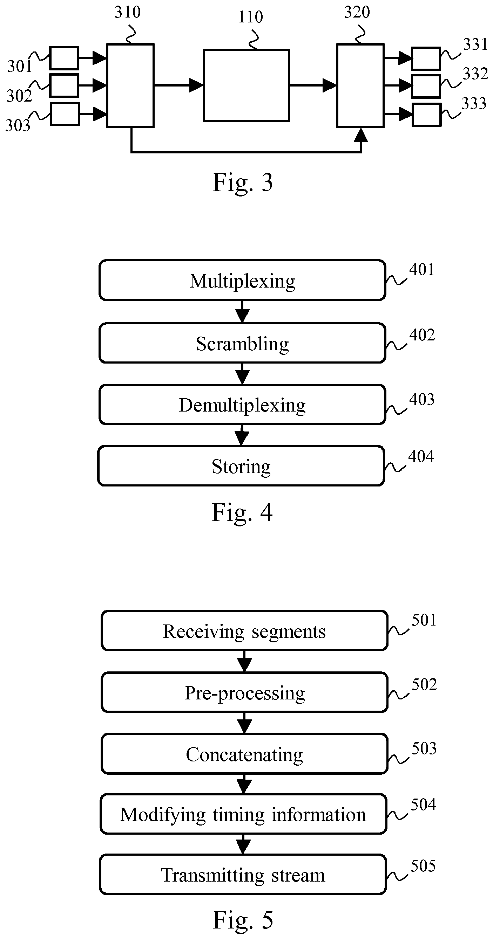

**Fig. 3** schematically represents a partial architecture of a content delivery system according to the present invention.

The architecture of the content delivery system according to the present invention relies mostly on the architecture presented hereinbefore with regard to Figs. 1 and 2. A multiplexing unit 310 is however included upstream the encrypting unit 110 and a demultiplexing unit 320 is included between the encrypting unit 110 and the server 113.

The multiplexing unit 310 receives streams 301, 302, 303, each stream corresponding to an encoding of a distinct layer of an audio-visual content to be provided in a scrambled form using CAS principles to an end-user equipped with a CAS-based terminal. The layers are composed of segments of groups of pictures (GOP) of the audio-visual content with different bitrates, corresponding for instance to plural resolutions.

The multiplexing unit 310 comprises means for performing a multiplexing operation as detailed hereafter with regard to Fig. 4 and outputs a multiplexed stream to the encrypting unit 110.

The encrypting unit 110 outputs a scrambled stream, to be demultiplexed by the demultiplexing unit 320. The demultiplexing unit 320 is then in charge of separating back each layer of the audio-visual content after execution of the scrambling operation by the encrypting unit 110. The demultiplexing unit 320 therefore recreates one stream per layer.

The demultiplexing unit 320 comprises means for performing a demultiplexing operation as detailed hereafter with regard to Fig. 4 and outputs streams 331, 332, 333, each stream corresponding to a scrambled distinct layer of the audio-visual content. Therefore, the stream 331 is a scrambled version of the stream 301, the stream 332 is a scrambled version of the stream 302 and the stream 333 is a scrambled version of the stream 303.

As detailed hereinafter, the operations of the multiplexing 310 and demultiplexing 320 units allow further switching from one layer to another without any discontinuity, nor any audio and/or video artefact, when viewing the audio-visual content from the end-user's standpoint.

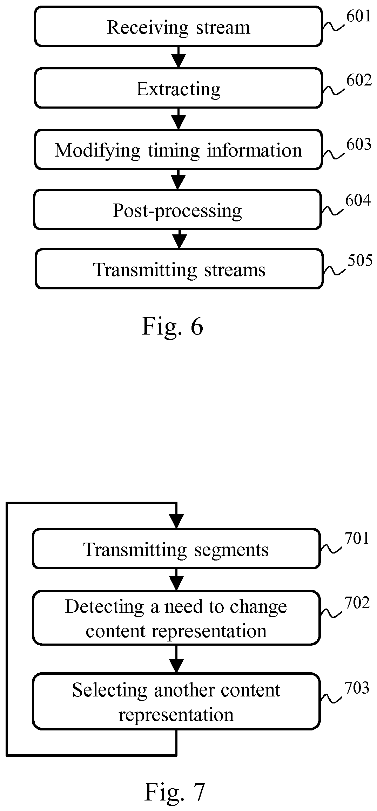

The multiplexing unit 310 and the demultiplexing unit 320 may be interconnected in order to allow the multiplexing unit 310 to provide information to the demultiplexing unit 320 via a link not crossing the scrambler. Such information corresponds for instance to tables providing characteristics of the original streams 301, 302, 303, useful to rebuild streams 331, 332, 333 as described hereafter with regard to Figs 5 and 6.

**Fig. 4** schematically represents an algorithm for enabling scrambling the streams 301, 302, 303 corresponding to the different layers of the audio-visual content.

In a step 401, the plural streams corresponding to the different layers are multiplexed on a segment basis to generate a multiplexed stream. The segments are indexed in each stream and segments with a same index in all streams correspond to the same part of the audio-visual content.

The multiplexing operation is such that said segments are placed one after the other, according to a predefined sequence of layers. Illustratively, the multiplexing operation starts with a first segment of a first layer, then with the corresponding first segment of a second layer, then with the corresponding first segment of a third layer, then with a second segment of the first layer, then with the corresponding second segment of the second layer, etc.

Each segment comprises timestamp information inserted when the original stream 301, 302, 303 comprising said segment has been generated. During the multiplexing operation, said timestamp information is modified in the multiplexed stream in order to match the timestamp information of a single stream. The multiplexing operation is such that timestamp information contained in the resulting multiplexed stream is representative of a stream with a duration equal to the duration of the audio-visual content multiplied by the number of multiplexed layers.

In case the scrambler requires that the input stream is a constant bitrate stream, the multiplex unit 310 produces a constant bitrate stream at a bitrate equal to the highest bitrate among the original streams 301, 302, 303, for instance by adding stuffing packets. More stuffing packets may be added if the stream having the highest bitrate among the original streams 301, 302, 303 does not originally contain enough stuffing packets for ECMs insertion.

A multiplexing operation is detailed hereafter with regard to Fig. 5 in the context of streaming in the MPEG2-TS format.

In a following step 402, the multiplexed stream with modified timestamp information is scrambled by the encrypting unit 110 to generate a scrambled stream, as already explained. The crypto-period applied by the encrypting unit is set as follows, in order to avoid skipping one crypto-period when switching from one layer to another:

$$CP \geq 2 \ (N\text{-}1)^*d + \Delta T$$

wherein:

- CP is the duration of the crypto-period;
- N is the number of layers;
- d is the segment duration;
- $\Delta T$ is the maximum period between two ECMs.

In a following step 403, the scrambled stream is demultiplexed in order to retrieve separate streams 331, 332, 333 for the different layers of the audio-visual content.

During the demultiplexing operation, the timestamp information is modified in each demultiplexed stream in order to match the timestamp information of a single stream. The demultiplexing operation is such that timestamp information contained in each resulting demultiplexed stream is representative of a stream with a duration equal to the duration of the audio-visual content.

A demultiplexing operation is detailed hereafter with regard to Fig. 6 in the context of streaming in the MPEG2-TS format.

In a following step 404, each demultiplexed stream is stored by the server 113 for further transmission to the user terminal 120. Transmitting segments to the user terminal 120 is detailed hereafter with regard to Fig. 7 in the context of streaming in the MPEG2-TS format.

The steps 401 and 403, as well as any and all steps of the algorithms described hereafter with regard to Figs. 5 and 6, may be implemented in software by execution of a set of instructions or program by a programmable computing machine, such as a PC (*Personal Computes*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

Fig. 3, as already described hereinbefore, shows a hardware implementation. Considering a software implementation, a processing device implements the functions related to the multiplexing 310 and demultiplexing 320 units. The processing device comprises the following components interconnected by a communications bus: a processor, microprocessor, microcontroller or CPU (*Central Processing Unit*); a RAM (*Random-Access Memory*); a ROM (*Read-Only Memory*); an HDD (*Hard-Disk* Drive) or an SD (*Secure Digital*) card reader, or any other device adapted to read information stored on storage means. CPU is capable of executing instructions loaded into RAM from ROM or from an external memory, such as an SD card or the HDD. After the processing device has been powered on, CPU is capable of reading instructions from RAM and executing these instructions. The instructions form one computer program that causes CPU to perform the step 401 and/or the step 402, or any or all of the steps of the algorithms described hereafter with regard to Figs. 5 and 6.

**Fig. 5** schematically represents an algorithm for multiplexing, before scrambling, the streams corresponding to different layers of the audio-visual content, in the context of streaming in the MPEG2-TS format.

In a step 501, streams corresponding to different layers of an audio-visual content are received. Each layer is then received in the form of a stream of indexed segments, each segment comprising one or more MPEG2-TS packets. All segments with a same index in the different layers is representative of a same part of the audio-visual content.

Each segment comprise timestamp information, called PCR (Program Clock Reference). PCR contains samples of a clock counter used to encode the layer to generate the MPEG2-TS stream. PCR is defined in the normative documents ISO/IEC 13818-1 "Coding of moving pictures and associated audio - Part 1: Systems", section 2.4.2.1. A same time base is used to generate the PCRs for all layers, which means that if PCRs were aligned in all layers, they would have the same value.

In a following step 502, a pre-processing is applied to the received segments. The pre-processing adds stuffing packets, if required, for later insertion of ECMs. This operation may require updating the PCRs in order to maintain consistency between PCR timestamp information of each stream and the bitrate of the stream, as the bitrate of the stream may be changed by this pre-processing.

In order to restore initial characteristics of each stream throughout the multiplexing and demultiplexing processes, the pre-processing comprises an analysis of the received segments to collect these initial characteristics.

The following example relies on out-of-band tables, *i.e.* tables that are not part of the streams. Another approach is to insert data related to such characteristics in a stream SYNC byte of some TS packets, a private data table, or any part of the stream resistive to the scrambling process.

A first table T1 stores the size of each segment for each stream, *i.e.* for each layer. The table T1 is used during the demultiplexing process to find the boundaries between segments, in order to be able to separate the different layers.

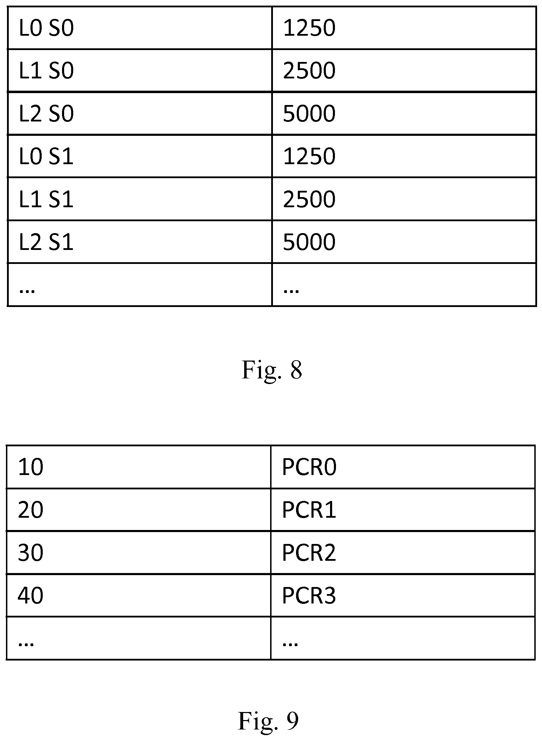

**Fig. 8** schematically represents an example of the table T1.

In the left column, segments are identified with an identifier $L_a S_b$, wherein:

- $L_a$ represents a layer identifier, with a being the index of the layer in the sequence of layers; and
- $S_b$ represents a segment identifier, with *b* being the index of the segment in the stream.

In the right column, for each segment identified in the left column, the quantity of MPEG2-TS packets contained in said segment is indicated.

Back to Fig. 5, a second table T2 stores for each stream the values of the PCRs and their respective positions in the segments. The table T2 is used during the demultiplexing process to restore the values of the PCRs after the scrambling process.

Fig. 9 schematically represents an example of the table T2 for one segment $L_aS_b$.

In the left column, the MPEG2-TS packets containing a PCR timestamp information are identified thanks to their index in the sequence of packets in the segment $L_aS_b$.

In the right column, for each packet identified in the left column, the PCR value contained in said packet is indicated. In Fig. 9, the PCR values are represented by $PCR_c$, wherein c is a positive integer.

Back to Fig. 5, a third table T3 may be created in order to store the values of the DTSs (Decoding Time Stamp) and their respective positions in the segments, for each layer. DTS is a timestamp information representative of an instant at which the audio-visual content data to which it refers are decoded by the decoder of the user terminal 120. The table T3 is used during the demultiplexing process to restore the values of the DTSs after the scrambling process. A fourth table T4 may be created in order to store the values of the PTSs (Presentation Time Stamp) and their respective positions in the segments, for each layer. PTS is a timestamp information representative of an instant at which the audiovisual content data to which it refers are provided by the decoder of the user terminal 120. The table T4 is used during the demultiplexing process to restore the values of the PTSs after the scrambling process.

In a following step 503, the segments from the stream corresponding to the different layers are concatenated. The segments corresponding to a same part of the audio-visual content are grouped together according to a predefined sequence. A single stream is thus created from the streams received in the step 501.

It can be noticed that a different sequence can be used to order the segments in each group; however the same sequence is preferably used all along the multiplexing operation.

In a following step 504, the timestamp information present in the concatenated segments is modified. All PCR values are updated as a function of the following parameters:

- SI: the segment index, which is the index of the considered segment in the original stream, *i.e.* for each one of the streams received in the step 501, such index starting at 0 for the first segment of the original stream and being incremented by one unit for each subsequent segment;
- PI: the position index of the stream in the sequence used for concatenating the streams received in the step 501 in order to form a single stream in the step 503, such index starting at 0 for the first stream in sequence and being incremented by one unit for each subsequent stream in sequence;
- D: the duration, in terms of ticks driving the counter generating the PCRs, of the segments.

Each new PCR value, called nPCR, is then obtained from the original PCR value, called oPCR, according to the following rule:

$$nPCR = oPCR + D * (SI * N + PI)$$

For the sake of simplicity, the rule stated above does not take into account the modulus implied by the length of the PCR field in the stream, but the one with ordinary skills in the art would easily derive this rule to take into account this aspect. Moreover, the formula supposes that all segments of a stream have the same size, but the one with ordinary skills in the art should not be tied by such a constraint.

PCR continuity along the stream of concatenated segments is thus ensured.

PTS and/or DTS may be modified according to the same principle.

With such a modification, the timestamp information in the concatenated segments is consistent, as if a single stream was originally encoded.

In a following step 505, the concatenated segments are transmitted to the encrypting unit 110.

When injecting the concatenated segments in the encrypting unit 110 with such a timestamp modification, the encrypting unit 110 acts as if a single layer has to be scrambled.

Fig. 6 schematically represents an algorithm for demultiplexing, after scrambling, the scrambled stream in order to obtain the separate scrambled streams for the different layers, in the context of streaming in the MPEG2-TS format.

In a step 601, a scrambled stream is received from the encrypting unit 110. The received stream has been scrambled by the encrypting unit 110, after having been multiplexed as already described with regard to Fig. 5.

In a following step 602, the segments are extracted in order to separate the different versions of the audio-visual content. Following this extraction, the layers are obtained back in the form of separate streams, but containing scrambled data.

The table T1 built during the multiplexing process may be used to perform this extraction. The table T1 provide information about the boundaries between the concatenated segments. It therefore means that the scrambling process doesn't affect the length of the stream, *i.e.* the fields of the stream scrambled by the encrypting unit 110 have the same size as before the scrambling operation.

In a following step 603, the timing information originally contained in each stream is restored.

The table T2 built during multiplexing proc-

ess may be used to perform this timestamp information restoration. From the table T2, position of each PCR value in each stream is obtained, as well as the value to be restored. PCR continuity along each stream is thus ensured.

DTS and/or PTS may be modified according to the same principle. The tables T3 and/or T4 built during the multiplexing process may be respectively used to perform this timestamp information restoration.

In a following step 604, a post-processing may be applied. The post-processing consists in deleting stuffing packets present in the streams resulting from the extracting step 602. These stuffing packets correspond to stuffing packets added in excess during the pre-processing performed by the multiplexing unit 310 in the step 502. Adding a greater amount of stuffing packets than strictly necessary is performed when the multiplexing unit cannot predict where the ECMs have to be inserted in the stream during the scrambling operation. It thus reduces the amount of data in the streams, and thus reduces the number of resources needed for storing the scrambled streams and transmitting segments to the user terminal 120.

In a following step 605, the streams are transmitted to the server 113. The server 113 stores the scrambled streams and stores an information indicating that the scrambled streams are associated with each other, meaning that the scrambled streams correspond to different layers of a same audio-visual content and that switching from one layer to another might be performed during delivery to the user terminal 120.

**Fig. 7** schematically represents an algorithm, performed by the server 113, for providing the audio-visual content to the user terminal 120, in the context of streaming in the MPEG2-TS format.

In a step 701, the server 113 starts transmitting segments of a scrambled stream stored by the server 113. The scrambled stream corresponds to one layer of an audio-visual content requested to be transmitted to the user terminal 120.

In a following step 702, the server 113 detects a need to change the layer of the audio-visual content transmitted to the user terminal 120.

According to a first example, the server 113 is informed that the network bandwidth available for the transmission from the server 113 to the user terminal 120 has changed and that the layer transmitted to the user terminal 120 has to be adapted accordingly. Another layer, corresponding to a higher or lower bitrate, shall then be transmitted to the user terminal 120 in order to allow the end-user to continue viewing the audio-visual content with the best quality possible in view of the available resources.

According to a second example, a mechanism, computing or estimating information related to transmission conditions toward the user terminal 120, is implemented by the server 113, selecting the appropriate layer being based on the computed or estimated information.

Such computation or estimation may be based on parameters such as transmission instants of TCP frames, acknowledgement instant of TCP frames, or modelling of buffers internal to the user terminal 120.

According to a third example, the server 113 receives a request from the player to switch to another layer, such a need being for instance determined by the player as a function of the resources used / available at the player side.

According to a fourth example, the server 113 receives from the service platform 112 a request to force the player to switch to another layer. The service platform 112 is thus able to manage priorities between audio-visual contents and then to request increasing the bitrate for an audio-visual content with a higher priority, thus indirectly increasing the quality for this audio-visual content compared to other audio-visual contents having a lower priority.

In a following step 703, the server 113 selects the appropriate scrambled stream, as a function of the need detected in the step 702, and repeats the step 701 of transmitting segments with the newly selected scrambled stream.

Segments may be transferred by the server 113 to the user terminal 120 using HTTP over TCP. Alternatively, segments may be transferred by the server 113 to the user terminal 120 using UDP. The player may in this case provide reports about UDP datagrams reception conditions to the server 113.

As segments representative of the same part of the audio-visual content in the different layers stored by the server 113 have been scrambled with the same code word $CW_P$ by the encrypting unit 110, making any combination of such successive segments a CAS-compliant sequence, and as the timestamp information is consistent from one segment to another, switching from one layer to another is seamlessly achieved from the end-user's standpoint.

**Claims**

1. A method for generating streams of respective layers representative of respective versions with respective bitrates of an audio-visual content for allowing seamlessly switching from one layer to another in a conditional access system context, a conditional access scrambler being configured to change a control word used to scramble multiplexed segments every crypto-period, **characterized in that** said method comprises:

   - concatenating segments of said layers to obtain said multiplexed segments, such that segments representative of a same part of the audio-visual content are grouped together;
   - modifying timestamp information in said multiplexed segments, such that said modified timestamp information matches the timestamp information of a single stream;
- injecting the multiplexed segments with modified timestamp information in the conditional access scrambler such that all segments representative of a same part of the audio-visual content are scrambled by the conditional access scrambler using a same control word;
- obtaining, from the conditional access scrambler, a scrambled multiplexed stream;
- extracting from said scrambled multiplexed stream one scrambled stream for each layer;
- restoring, in each extracted scrambled stream, timestamp information, such that said restored timestamp information matches the timestamp information of a single stream,

and **in that** the crypto-period is greater than or equal to a period between two successive messages encrypting said control word added by the scrambler in the multiplexed segments plus twice the duration of each segment multiplied by the number of layers decremented by one unit.

2. The method according to claim 1, **characterized in that** it comprises beforehand inserting stuffing packets.

3. The method according to claim 2, **characterized in that** it comprises, after restoring timestamp information, deleting stuffing packets that have not been replaced, by said conditional access scrambler, by a message encrypting a control word used to scramble the multiplexed segments.

4. The method according to any one of claims 1 to 3, **characterized in that** the method further comprises, before modifying said timestamp information:

- generating a first table providing a correspondence between an index of each segment of each layer and a size of said segment;

and **in that** extracting the scrambled streams is performed by using said generated first table.

5. The method according to any one of claims 1 to 4, **characterized in that** the method further comprises, before modifying said timestamp information:

- generating at least one second table providing a correspondence between positions of said timestamp information in the multiplexed stream and original values of said timestamp information;

and **in that** restoring the timestamp information is performed by using said generated at least one second table.

6. The method according to any one of claims 4 and 5, **characterized in that** concatenating the segments and modifying the timestamp information are performed by a multiplexing unit connected upstream to said scrambler and
**in that** extracting the scrambled streams and restoring the timestamp information are performed by a demultiplexing unit connected downstream to said scrambler and
**in that** each said table is provided by the multiplexing unit to the demultiplexing unit using a link not crossing the scrambler.

7. The method according to any one of claims 4 and 5, **characterized in that** concatenating the segments and modifying the timestamp information are performed by a multiplexing unit connected upstream to said scrambler and
**in that** extracting the scrambled streams and restoring the timestamp information are performed by a demultiplexing unit connected downstream to said scrambler and
**in that** each said table is provided by the multiplexing unit to the demultiplexing unit by incorporation in a part of the multiplexed stream resistive to scrambling.

8. The method according to any one of claims 1 to 7, **characterized in that** that said timestamp information comprises samples of a counter of a clock reference used to encode each layer for generating said segments.

9. The method according to claim 8, **characterized in that** that said timestamp information further comprises timestamp information representative of an instant at which audio-visual content data to which it refers have to be provided and/or decoded by a decoder.

10. A computer program, **characterized in that** it comprises program code instructions which can be loaded in a programmable device for implementing the method according to any one of claims 1 to 9, when the program code instructions are run by the programmable device.

11. Information storage means, **characterized in that** they store a computer program comprising program code instructions which can be loaded in a programmable device for implementing the method according to any one of claims 1 to 9, when the program code instructions are run by the programmable device.

12. A device for generating streams of respective layers representative of respective versions with respective bitrates of an audio-visual content for allowing seamlessly switching from one layer to another in a conditional access system context, the device being intended to be used with a conditional access scrambler configured to change a control word used to scramble multiplexed segments every crypto-period, **characterized in that** said device comprises:

- means for concatenating segments of said layers to obtain said multiplexed segments, such that segments representative of a same part of the audio-visual content are grouped together;
- means for modifying timestamp information in said multiplexed segments, such that said modified timestamp information matches the timestamp information of a single stream;
- means for injecting the multiplexed segments with modified timestamp information in a conditional access scrambler such that all segments representative of a same part of the audio-visual content are scrambled by the conditional access scrambler using a same control word;
- means for obtaining, from the conditional access scrambler, a scrambled multiplexed stream;
- means for extracting from said scrambled multiplexed stream one scrambled stream for each layer;
- means for restoring, in each extracted scrambled stream, timestamp information, such that said restored timestamp information matches the timestamp information of a single stream.

and **in that** said device comprises means for configuring the crypto-period such that said crypto-period is greater than or equal to a period between two successive messages encrypting said control word added by the scrambler in the multiplexed segments plus twice the duration of each segment multiplied by the number of layers decremented by one unit.

**Patentansprüche**

1. Verfahren zum Erzeugen von Strömen jeweiliger Schichten, die jeweils verschiedene Versionen mit jeweiligen Bitraten eines audiovisuellen Inhalts repräsentieren, zum Ermöglichen nahtlosen Umschaltens von einer Schicht zu einer anderen in einem Systemkontext mit bedingtem Zugang, wobei ein Bedingter-Zugang-Verwürfler ausgelegt ist zum Ändern eines Steuerworts, das zum Verwürfeln gemultiplexter Segmente verwendet wird, zu jeder Cryptoperiode, **dadurch gekennzeichnet, dass** das Verfahren die folgenden Schritte umfasst:

- Verketten von Segmenten der Schichten, um die gemultiplexten Segmente zu erhalten, derart, dass Segmente, die einen gleichen Teil des audiovisuellen Inhalts repräsentieren, zusammengruppiert werden;
- Modifizieren von Zeitstempelinformationen in den gemultiplexten Segmenten, derart, dass die modifizierten Zeitstempelinformationen mit den Zeitstempelinformationen eines Einzelstroms übereinstimmen;
- Eingeben der gemultiplexten Segmente mit modifizierten Zeitstempelinformationen in den Bedingter-Zugang-Verwürfler, derart, dass alle Segmente, die einen selben Teil des audiovisuellen Inhalts repräsentieren, von dem Bedingter-Zugang-Verwürfler unter Verwendung eines selben Steuerworts verwürfelt werden;
- Erhalten, vom Bedingter-Zugang-Verwürfler, eines verwürfelten gemultiplexten Stroms;
- Extrahieren aus dem verwürfelten gemultiplexten Strom eines verwürfelten Stroms für jede Schicht;
- Wiederherstellen, in jedem extrahierten verwürfelten Strom, von Zeitstempelinformationen, derart, dass die wiederhergestellten Zeitstempelinformationen mit den Zeitstempelinformationen eines Einzelstroms übereinstimmen,

und dass die Cryptoperiode größer oder gleich einer Periode zwischen zwei aufeinanderfolgenden Nachrichten, die das Steuerwort, das von dem Verwürfler in den gemultiplexten Segmenten hinzugefügt wurde, verschlüsseln, plus zweimal die Dauer jedes Segments multipliziert mit der Anzahl von Schichten erniedrigt um eine Einheit.

2. Verfahren nach Anspruch 1, **dadurch gekennzeichnet, dass** es vorab das Einsetzen von Stopfpaketen umfasst.

3. Verfahren nach Anspruch 2, **dadurch gekennzeichnet, dass** es, nach dem Wiederherstellen der Zeitstempelinformationen, das Löschen der Stopfpakete, die noch nicht ersetzt wurden, durch den Bedingter-Zugang-Verwürfler durch eine Nachricht, die ein zum Verwürfeln der gemultiplexten Segmente verwendetes Steuerwort verschlüsselt, umfasst.

4. Verfahren nach einem der Ansprüche 1 bis 3, **dadurch gekennzeichnet, dass** das Verfahren ferner vor dem Modifizieren der Zeitstempelinformationen den folgenden Schritt umfasst:

- Erzeugen einer ersten Tabelle, die eine Beziehung zwischen einem Index von jedem Segment von jeder Schicht und einer Größe des Segments bereitstellt;

und dass Extrahieren der verwürfelten Ströme unter Verwendung der erzeugten ersten Tabelle durchgeführt wird.

5. Verfahren nach einem der Ansprüche 1 bis 4, **dadurch gekennzeichnet, dass** das Verfahren ferner vor dem Modifizieren der Zeitstempelinformationen den folgenden Schritt umfasst:

    - Erzeugen mindestens einer zweiten Tabelle, die eine Beziehung zwischen Positionen der Zeitstempelinformationen in dem gemultiplexten Strom und Originalwerten der Zeitstempelinformationen bereitstellt;

und dass Wiederherstellen der Zeitstempelinformationen unter Verwendung der erzeugten mindestens einen zweiten Tabelle durchgeführt wird.

6. Verfahren nach einem der Ansprüche 4 und 5, **dadurch gekennzeichnet, dass** Verketten der Segmente und Modifizieren der Zeitstempelinformationen von einer Multiplexingeinheit, die flussaufwärts mit dem Verwürfler verbunden ist, durchgeführt werden und
dass Extrahieren der verwürfelten Ströme und Wiederherstellen der Zeitstempelinformationen von einer Demultiplexingeinheit, die flussabwärts mit dem Verwürfler verbunden ist, durchgeführt werden und dass jede Tabelle von der Multiplexingeinheit für die Demultiplexingeinheit unter Verwendung einer Verbindung, die den Verwürfler nicht durchläuft, bereitgestellt wird.

7. Verfahren nach einem der Ansprüche 4 und 5, **dadurch gekennzeichnet, dass** Verketten der Segmente und Modifizieren der Zeitstempelinformationen von einer Multiplexingeinheit, die flussaufwärts mit dem Verwürfler verbunden ist, durchgeführt werden und
dass Extrahieren der verwürfelten Ströme und Wiederherstellen der Zeitstempelinformationen von einer Demultiplexingeinheit, die flussabwärts mit dem Verwürfler verbunden ist, durchgeführt werden und dass jede Tabelle von der Multiplexingeinheit für die Demultiplexingeinheit durch Einschließen in einem Teil des gemultiplexten Stroms, der Verwürfeln widersteht, bereitgestellt wird.

8. Verfahren nach einem der Ansprüche 1 bis 7, **dadurch gekennzeichnet, dass** die Zeitstempelinformationen Abtastungen eines Zählers einer Taktreferenz, die zum Codieren jeder Schicht zum Erzeugen der Segmente verwendet wird, umfasst.

9. Verfahren nach Anspruch 8, **dadurch gekennzeichnet, dass** die Zeitstempelinformationen ferner Zeitstempelinformationen umfassen, die einen Zeitpunkt, zu dem audiovisuelle Inhaltsdaten, auf die sie verweisen, bereitgestellt und/oder von einem Decoder decodiert werden müssen, repräsentieren.

10. Computerprogramm, **dadurch gekennzeichnet, dass** es Programmcodeanweisungen umfasst, die in eine programmierbare Vorrichtung geladen werden können, zum Implementieren des Verfahrens nach einem der Ansprüche 1 bis 9, wenn die Programmcodeanweisungen von der programmierbaren Vorrichtung laufengelassen werden.

11. Informationsspeichermittel, **dadurch gekennzeichnet, dass** sie ein Computerprogramm speichern, das Programmcodeanweisungen umfasst, die in eine programmierbare Vorrichtung geladen werden können, zum Implementieren des Verfahrens nach einem der Ansprüche 1 bis 9, wenn die Programmcodeanweisungen von der programmierbaren Vorrichtung laufengelassen werden.

12. Vorrichtung zum Erzeugen von Strömen jeweiliger Schichten, die jeweils verschiedene Versionen mit jeweiligen Bitraten eines audiovisuellen Inhalts repräsentieren, zum Ermöglichen nahtlosen Umschaltens von einer Schicht zu einer anderen in einem Systemkontext mit bedingtem Zugang, wobei die Vorrichtung zur Verwendung mit einem Bedingter-Zugang-Verwürfler gedacht ist, der ausgelegt ist zum Ändern eines Steuerworts, das zum Verwürfeln gemultiplexter Segmente verwendet wird, zu jeder Cryptoperiode, **dadurch gekennzeichnet, dass** die Vorrichtung Folgendes umfasst:

    - Mittel zum Verketten von Segmenten der Schichten, um die gemultiplexten Segmente zu erhalten, derart, dass Segmente, die einen gleichen Teil des audiovisuellen Inhalts repräsentieren, zusammengruppiert werden;
    - Mittel zum Modifizieren von Zeitstempelinformationen in den gemultiplexten Segmenten, derart, dass die modifizierten Zeitstempelinformationen mit den Zeitstempelinformationen eines Einzelstroms übereinstimmen;
    - Mittel zum Eingeben der gemultiplexten Segmente mit modifizierten Zeitstempelinformationen in einen Bedingter-Zugang-Verwürfler, derart, dass alle Segmente, die einen selben Teil des audiovisuellen Inhalts repräsentieren, von dem Bedingter-Zugang-Verwürfler unter Verwendung eines selben Steuerworts verwürfelt werden;
    - Mittel zum Erhalten, vom Bedingter-Zugang-Verwürfler, eines verwürfelten gemultiplexten Stroms;
    - Mittel zum Extrahieren aus dem verwürfelten gemultiplexten Strom eines verwürfelten Stroms für jede Schicht;
    - Mittel zum Wiederherstellen, in jedem extrahierten verwürfelten Strom, von Zeitstempelinformationen, derart, dass die wiederhergestellten Zeitstempelinformationen mit den Zeitstempelinformationen eines Einzelstroms übereinstimmen,

und dass die Vorrichtung Mittel zum Konfigurieren der Cryptoperiode umfasst, so dass die Cryptoperiode größer oder gleich einer Periode zwischen zwei aufeinanderfolgenden Nachrichten, die das Steuerwort, das von dem Verwürfler in den gemultiplexten Segmenten hinzugefügt wurde, verschlüsseln, plus zweimal die Dauer jedes Segments multipliziert mit der Anzahl von Schichten erniedrigt um eine Einheit.

## Revendications

1. Procédé pour générer des flux de couches respectives représentatives de versions respectives avec des débits binaires respectifs d'un contenu audiovisuel pour permettre de basculer de façon transparente d'une couche à une autre dans un contexte de système à accès conditionnel, un brouilleur pour accès conditionnel étant configuré pour changer un mot de contrôle utilisé pour brouiller des segments multiplexés à chaque crypto-période, **caractérisé en ce que** ledit procédé comprend :

> - concaténer des segments desdites couches pour obtenir lesdits segments multiplexés de telle sorte que des segments représentatifs d'une même partie du contenu audio-visuel sont groupés ensemble ;
> - modifier une information d'horodatage dans lesdits segments multiplexés, de telle sorte que l'information d'horodatage modifiée corresponde à l'information d'horodatage d'un unique flux ;
> - injecter les segments multiplexés avec l'information d'horodatage modifiée dans le brouilleur pour accès conditionnel de telle sorte que tous les segments représentatifs d'une même partie du contenu audio-visuel sont brouillés en utilisant un même mot de contrôle ;
> - obtenir, du brouilleur pour accès conditionnel, un flux multiplexé brouillé ;
> - extraire dudit flux multiplexé brouillé un flux brouillé pour chaque couche ;
> - restaurer, dans chaque flux brouillé extrait, une information d'horodatage, de telle sorte que l'information d'horodatage restaurée corresponde à l'information d'horodatage d'un unique flux,

et **en ce que** la crypto-période est supérieure ou égale à une période entre deux messages successifs encryptant ledit mot de contrôle ajoutés par le brouilleur dans les segments multiplexés plus deux fois la durée de chaque segment multipliée par le nombre de couches décrémenté d'une unité.

2. Procédé selon la revendication 1, **caractérisé en ce qu'**il comprend au préalable d'insérer des paquets de bourrage.

3. Procédé selon la revendication 2, **caractérisé en ce qu'**il comprend, après avoir restauré l'information d'horodatage, d'effacer des paquets de bourrage qui n'ont pas été remplacés, par ledit brouilleur pour accès conditionnel, par un message encryptant un mot de contrôle utilisé pour brouiller les segments multiplexés.

4. Procédé selon l'une quelconque des revendications 1 à 3, **caractérisé en ce qu'**il comprend en outre, avant de modifier ladite information d'horodatage :

> - générer une première table fournissant une correspondance entre un index de chaque segment de chaque couche et une taille dudit segment ;

et **en ce que** extraire les flux brouillés est effectué en utilisant ladite première table générée.

5. Procédé selon l'une quelconque des revendications 1 à 4, **caractérisé en ce qu'**il comprend en outre, avant de modifier ladite information d'horodatage :

> - générer au moins une seconde table fournissant une correspondance entre des positions de l'information d'horodatage dans le flux multiplexé et des valeurs d'origine de ladite information d'horodatage ;

et **en ce que** restaurer l'information d'horodatage est effectué en utilisant ladite au moins une seconde table générée.

6. Procédé selon l'une quelconque des revendications 4 et 5, **caractérisé en ce que** concaténer les segments et modifier l'information d'horodatage sont effectués par une unité de multiplexage connecté en amont dudit brouilleur, **en ce que** extraire les flux brouillés et restaurer l'information d'horodatage sont effectués par une unité de démultiplexage connectée en aval dudit brouilleur, et **en ce que** chaque table est fournie par l'unité de multiplexage à l'unité de démultiplexage en utilisant un lien ne traversant pas le brouilleur.

7. Procédé selon l'une quelconque des revendications 4 et 5, **caractérisé en ce que** concaténer les segments et modifier l'information d'horodatage sont effectués par une unité de multiplexage connecté en amont dudit brouilleur,

**en ce que** extraire les flux brouillés et restaurer l'information d'horodatage sont effectués par une unité de démultiplexage connectée en aval dudit brouilleur, et

**en ce que** chaque table est fournie par l'unité de multiplexage à l'unité de démultiplexage par incorporation dans une partie du flux multiplexé résistante au brouillage.

8.  Procédé selon l'une quelconque des revendications 1 à 7, **caractérisé en ce que** ladite information d'horodatage comporte des échantillons d'un compteur d'une référence d'horloge utilisée pour encoder chaque couche afin de générer lesdits segments.

9.  Procédé selon la revendication 8, **caractérisé en ce que** ladite information d'horodatage comporte en outre une information d'horodatage représentative d'un instant auquel des données du contenu audio-visuel auxquelles elle réfère doivent être fournies et/ou décodées par un décodeur.

10. Programme d'ordinateur, **caractérisé en ce qu'**il comprend des instructions de code de programme qui peuvent être chargées dans un dispositif programmable pour implémenter le procédé selon l'une quelconque des revendications 1 à 9, lorsque les instructions de code de programme sont exécutées par le dispositif programmable.

11. Moyens de stockage d'informations, **caractérisés en ce qu'**ils stockent un programme d'ordinateur comprenant des instructions de code de programme qui peuvent être chargées dans un dispositif programmable pour implémenter le procédé selon l'une quelconque des revendications 1 à 9, lorsque les instructions de code de programme sont exécutées par le dispositif programmable.

12. Dispositif pour générer des flux de couches respectives représentatives de versions respectives avec des débits binaires respectifs d'un contenu audio-visuel pour permettre de basculer de façon transparente d'une couche à une autre dans un contexte de système à accès conditionnel, le dispositif étant destiné à être utilisé avec un brouilleur pour accès conditionnel étant configuré pour changer un mot de contrôle utilisé pour brouiller des segments multiplexés à chaque crypto-période, **caractérisé en ce que** ledit dispositif comprend :

   - des moyens pour concaténer des segments desdites couches pour obtenir lesdits segments multiplexés de telle sorte que des segments représentatifs d'une même partie du contenu audio-visuel sont groupés ensemble ;
   - des moyens pour modifier une information d'horodatage dans lesdits segments multiplexés, de telle sorte que l'information d'horodatage modifiée corresponde à l'information d'horodatage d'un unique flux ;
   - des moyens pour injecter les segments multiplexés avec l'information d'horodatage modifiée dans le brouilleur pour accès conditionnel de telle sorte que tous les segments représentatifs d'une même partie du contenu audio-visuel sont brouillés en utilisant un même mot de contrôle ;
   - des moyens pour obtenir, du brouilleur pour accès conditionnel, un flux multiplexé brouillé ;
   - des moyens pour extraire dudit flux multiplexé brouillé un flux brouillé pour chaque couche ;
   - des moyens pour restaurer, dans chaque flux brouillé extrait, une information d'horodatage, de telle sorte que l'information d'horodatage restaurée corresponde à l'information d'horodatage d'un unique flux,

et **en ce que** le dispositif comporte des moyens pour configurer la crypto-période de telle sorte que la crypto-période est supérieure ou égale à une période entre deux messages successifs encryptant ledit mot de contrôle ajoutés par le brouilleur dans les segments multiplexés plus deux fois la durée de chaque segment multipliée par le nombre de couches décrémenté d'une unité.

Fig. 1

Fig. 2

Fig. 3

Fig. 4

Fig. 5

```
┌─────────────────────────────┐
│      Receiving stream       │ ～ 601
└─────────────────────────────┘
              │
              ▼
┌─────────────────────────────┐
│         Extracting          │ ～ 602
└─────────────────────────────┘
              │
              ▼
┌─────────────────────────────┐
│ Modifying timing information│ ～ 603
└─────────────────────────────┘
              │
              ▼
┌─────────────────────────────┐
│       Post-processing       │ ～ 604
└─────────────────────────────┘
              │
              ▼
┌─────────────────────────────┐
│     Transmitting streams    │ ～ 505
└─────────────────────────────┘
```

Fig. 6

```
┌──────────────────────────────────┐
│                                  │
│      ▼                           │
│ ┌─────────────────────────────┐  │
│ │    Transmitting segments    │ ～ 701
│ └─────────────────────────────┘  │
│      │                           │
│      ▼                           │
│ ┌─────────────────────────────┐  │
│ │   Detecting a need to change │ ～ 702
│ │    content representation    │  │
│ └─────────────────────────────┘  │
│      │                           │
│      ▼                           │
│ ┌─────────────────────────────┐  │
│ │   Selecting another content  │ ～ 703
│ │       representation         │  │
│ └─────────────────────────────┘  │
│                                  │
└──────────────────────────────────┘
```

Fig. 7

| L0 S0 | 1250 |
|-------|------|
| L1 S0 | 2500 |
| L2 S0 | 5000 |
| L0 S1 | 1250 |
| L1 S1 | 2500 |
| L2 S1 | 5000 |
| ... | ... |

Fig. 8

| 10 | PCR0 |
|----|------|
| 20 | PCR1 |
| 30 | PCR2 |
| 40 | PCR3 |
| ... | ... |

Fig. 9

**EP 2 685 737 B1**

**REFERENCES CITED IN THE DESCRIPTION**

**Patent documents cited in the description**

- WO 2012060643 A

- WO 2004095825 A

**Non-patent literature cited in the description**

- Coding of moving pictures and associated audio - Part 1: Systems. *ISO/IEC 13818-1*